# EUROPÄISCHE PATENTANMELDUNG

(11) **EP 4 726 237 A1**
(43) Veröffentlichungstag der Anmeldung: **15.04.2026**
(21) Anmeldenummer: 25208150.0
(22) Anmeldetag: 10.10.2025
(51) Int. Cl.: F16H 49/00

(54) **SPANNUNGSWELLENGETRIEBE**

(30) Priorität: 11.10.2024 LU 508526
(71) Anmelder: Ovalo GmbH, 65555 Limburg (DE)
(72) Erfinder: Yilmaz, Anil-Cem, 35641 Aßlar (DE)
(74) Vertreter: Hoffmann, Jürgen

(57) **Zusammenfassung**

Die Erfindung betrifft ein Spannungswellengetriebe beinhaltend wenigstens drei Getriebeelemente, nämlich einen Circularspline, einen Flexspline und einen Wellengenerator, und beinhaltend eine Stellvorrichtung, mittels der die Relativposition von wenigstens zwei der Getriebeelemente zueinander veränderbar ist. Das Spannungswellengetriebe zeichnet sich dadurch aus, dass die Stellvorrichtung wenigstens ein Formgedächtnis-Element aufweist.

## Beschreibung

Die Erfindung betrifft ein Spannungswellengetriebe beinhaltend wenigstens drei Getriebeelemente, nämlich einen Circularspline, einen Flexspline und einen Wellengenerator, und beinhaltend eine Stellvorrichtung, mittels der die Relativposition von wenigstens zwei der Getriebeelemente zueinander veränderbar ist.

Die Erfindung betrifft außerdem einen Aktuator, der ein solches Spannungswellengetriebe sowie einen Antriebsmotor aufweist.

Die Erfindung betrifft ferner einen Roboter, der ein solches Spannungswellengetriebe oder einen solchen Aktuator aufweist, und ein Robotergelenk, das wenigstens ein solches Spannungswellengetriebe oder einen solchen Aktuator aufweist, und ein Fahrwerk, das ein solches Spannungswellengetriebe oder einen solchen Aktuator aufweist, sowie eine Lenkung, insbesondere PKW-Lenkung oder LKW-Lenkung, die ein solches Spannungswellengetriebe oder einen solchen Aktuator aufweist.

Die Erfindung betrifft außerdem ein motorisiertes Gelenk mit einem solchen Spannungswellengetriebe und darüber hinaus einen programmierbaren Bewegungsautomaten, der ein solches Spannungswellengetriebe oder ein solches motorisiertes Gelenk beinhaltet.

Ein Spannungswellengetriebe besitzt zumeist ein starres, ringförmiges, innenverzahntes Zahnrad, das als Circularspline bezeichnet wird, und ein flexibles außenverzahntes Zahnrad, das teilweise im Inneren des starren innenverzahnten Zahnrads angeordnet ist und das als Flexspline bezeichnet wird, wobei die Verzahnung des Circularspline mit der Verzahnung des Flexspline (zumeist an zwei gegenüberliegenden Stellen) in Eingriff steht. Der Circularspline und der Flexspline weisen eine unterschiedliche Zahl von Zähnen auf. Der Flexspline kann beispielsweise in Form eines Flextopfes oder eines Flexhutes ausgebildet sein. Innerhalb des Flexsplines ist zumeist ein Wellengenerator angeordnet. In unmontiertem Zustand weist ein Flexspline eine zylinderförmige und im Querschnitt kreisrunde flexible, dünne Wandung auf, die an einem Ende mit einem Topfboden (Topfgetriebe) oder einer Krempe (Hutgetriebe) versehen sein kann. An dem Topfboden bzw. an der Krempe kann eine Welle drehfest angeordnet werden. Am anderen Ende weist ein Flexspline seine Außenverzahnung auf, die mit der Circularsplineverzahnung nach dem Einfügen des Wellengenerators an zumeist zwei gegenüberliegenden Stellen in Zahneingriff kommt (auch ein Eingriff an drei oder mehr Stellen ist grundsätzlich möglich). Der zumeist elliptische Wellengenerator drückt den Flexspline in eine elliptische Form und bringt so die Außenverzahnung des Flexsplines mit der Innenverzahnung des Circularsplines an jedem Ende der Ellipsen-Hauptachse miteinander in Eingriff.

Bei Topfgetrieben und Hutgetrieben wird der Flexspline in Richtung der Ellipsenhochachse radial auseinander gedrückt, so dass in der Ebene der Ellipsenhochachse die rohrförmige Wandung des Flexsplines ausgehend von dem Topfboden bzw. der Krempe keilförmig auseinander läuft, während die rohrförmige Wandung des Flexsplines in der Ebene der Ellipsenniedrigachse ausgehend von dem Topfboden bzw. der Krempe keilförmig zusammen läuft.

Bei einem Spannungswellengetriebe ist die sog. Vorspannung ein für ein ordnungsgemäßes Funktionieren relevanter Parameter. Die Vorspannung entsteht, wenn der Wellengenerator in den Flexspline eingefügt wird, wodurch Zähne von dessen Außenverzahnung in Zahneingriff mit Zähnen der Innenverzahnung des Circularsplines gebracht werden.

Eine zu hohe Vorspannung kann beispielsweise zu übermäßigem Verschleiß und einer Verkürzung der Lebensdauer führen, während eine zu geringe Vorspannung zu einem ineffizienten Betrieb und zu verminderter Drehmomentkapazität führen kann.

Ein Spannungswellengetriebe mit einem Flextopf ist beispielsweise aus US 6 050 155 A bekannt.

Neben Spannungswellengetrieben, die einen Flextopf mit einer rohrförmigen Flextopfwandung und einem Flextopfboden aufweisen, gibt es auch Spannungswellengetriebe anderer Art. Beispielsweise sind aus DE 11 2011 105 253 T5 und aus DE 11 2013 004 710 T5 Spannungswellengetriebe vom Huttyp bekannt.

Aus EP 4 276 332 A1 ist ein Spannungswellengetriebe mit einem Circularspline, einem Flexspline und mit einem Wellengenerator bekannt, bei dem der Wellengenerator relativ zu dem Flexspline axial verschiebbar angeordnet ist, um das Losbrechmoment, das Leerlaufmoment, das Durchdrehmoment, das Rückreibmoment, die Steifigkeit, das Spiel oder die Lost-Motion des Spannungswellengetriebes zu verändern.

Aus der Offenlegungsschrift US 2015 0184700 A1 ist ein Spannungswellengetriebe bekannt, bei dem der Wellengenerator relativ zu dem Flexspline stufenlos oder in Stufen axial verstellbar angeordnet ist.

Aus der Offenlegungsschrift WO 2022 062620 A1 ist ein Spannungswellengetriebe mit einem besonderen Wellengenerator bekannt, dessen Formungsmittel veränderbar ist.

Es ist die Aufgabe der vorliegenden Erfindung ein Spannungswellengetriebe anzugeben, das während des laufenden Betriebs in einfacher Weise an unterschiedliche Belastungssituationen anpassbar ist.

Die Aufgabe wird durch ein Spannungswellengetriebe der eingangs genannten Art gelöst, das dadurch gekennzeichnet ist, dass die Stellvorrichtung wenigstens ein Formgedächtnis-Element aufweist.

Im Sinne der hier beschriebenen Erfindung bezeichnet der Begriff Formgedächtnis-Element ein Element aus einem Werkstoff, der nach einer Formänderung infolge eines äußeren Stimulus selbsttätig in eine festgelegte Ausgangs- oder Zielgestalt zurückkehrt. Der Stimulus kann insbesondere eine Änderung der Temperatur, eines elektrischen oder magnetischen Feldes, eine Bestrahlung, z. B. mit UV-Licht, sein. Der Stimulus kann auch eine mechanische Beanspruchung (z. B. Druck, Zug, Biegung) sein, sofern diese Beanspruchung im Werkstoff eine reversible strukturelle oder molekulare Umordnung bewirkt (z. B. spannungsinduzierte Martensitbildung bei Formgedächtnislegierungen oder Segment-Reorientierung bei Formgedächtnispolymeren). Das Formgedächtnis-Element kann zusätzlich elastische Eigenschaften aufweisen; seine Rückstellung beruht jedoch nicht ausschließlich auf einer elastischen Rückstellwirkung, sondern auf einer materialinternen strukturellen oder molekularen Umordnung. Ein Element, bei dem eine Rückkehr in eine Ausgangslage ausschließlich auf dessen Elastizität beruht, wie beispielsweise eine reine Feder, ist kein Formgedächtnis-Element im Sinne der vorliegenden Erfindung.

In erfindungsgemäßer Weise wurde erkannt, dass die Positionierung, insbesondere die axiale Positionierung, von Circularspline, Flexspline und Wellengenerator jeweils relativ zueinander wichtige Eigenschaften eines Spannungswellgetriebes wie Drehmomentkapazität und Lebensdauer beeinflusst. Insbesondere die axiale Einbaulage des Wellengenerators relativ zum Flexspline ist ein wichtiger Parameter, der zentrale Eigenschaften des Spannungswellengetriebes wie beispielsweise Drehmomentkapazität und Lebensdauer beeinflusst.

In erfindungsgemäßer Weise wurde weiter erkannt, dass wesentliche Betriebsparameter eines Spannungswellengetriebes in vergleichsweise einfacher Weise dadurch beeinflusst werden können, dass die Relativposition von wenigstens zwei Getriebeelementen zueinander mittels einer Stellvorrichtung verändert wird, die ein Formgedächtnis-Element beinhaltet. In besonders vorteilhafter Weise kann hierbei beispielsweise eine Rückverformung des Formgedächtnis-Elements in seine ursprüngliche Form dazu ausgenutzt werden, ein Getriebeelement relativ zu einem anderen Getriebeelement zu bewegen. Insbesondere kann vorteilhaft vorgesehen sein, dass ein vom Betriebszustand des Spannungswellengetriebes abhängiger Getriebeparameter, beispielsweise eine Temperatur, direkt oder indirekt als Auslöser für eine Verformung und/oder Rückverformung des Formgedächtnis-Elements genutzt wird.

In erfindungsgemäßer Weise wurde außerdem erkannt, dass die Vorspannung ein wesentlicher Betriebsparameter eines Spannungswellengetriebes ist. Der Wellengenerator ist, wie bereits erwähnt, oftmals ellipsenförmig ausgebildet, wobei seine Exzentrizität die Verformung des Flexsplines bestimmt. Je größer die Exzentrizität, desto stärker wird der Flexspline verformt, was eine höhere Vorspannung erzeugt. Gleiches gilt sinngemäß analog, wenn der Flexspline zwar oval, jedoch nicht elliptisch ausgebildet ist. Der Flexspline besteht aus einem elastischen Material, zumeist Stahl, das sich unter der Einwirkung des Wellengenerators verformt. Seine Steifigkeit und das Elastizitätsmodul des verwendeten Materials beeinflussen ebenfalls die Vorspannung. Ein flexibleres Material erzeugt bei gegebener Verformung eine geringere Vorspannung, während ein steiferes Material eine höhere Vorspannung erfordert, um dieselbe Verformung zu erreichen. Die Dicke der Flexspline-Wandung hat ebenfalls einen direkten Einfluss auf die Vorspannung. Eine dickere Wandung erfordert mehr Kraft, um dieselbe Verformung zu erreichen, was eine höhere Vorspannung bedeutet. Bei einer dünneren Wandung ist der Widerstand gegen die Verformung reduziert, was die Vorspannung bei gleichem Wellengenerator verringert. Beispielsweise hat auch die axiale Stellung des Wellengenerators relativ zu dem Flexspline einen Einfluss auf die Vorspannung.

Während des Betriebs eines Spannungswellgetriebes können beispielsweise durch erhöhte Drehmomentbelastungen und/oder Mikrobewegungen und hierdurch verursachte erhöhte Verspannungen, verschleißerhöhende und lebensdauerreduzierende Betriebssituationen auftreten. Diese Betriebssituationen gehen häufig mit einer erhöhten Wärmeentwicklung einher. Bei einem möglichen Ausführungsbeispiel der Erfindung wird diese Wärme dazu genutzt, um das Formgedächtnis-Element der Stellvorrichtung zu aktivieren und durch eine, insbesondere vorübergehende, Veränderung der Relativposition von wenigstens zwei der Getriebeelemente eine Verbesserung der Betriebssituation zu bewirken.

In besonders vorteilhafter Weise kann die Stellvorrichtung durch das Formgedächtnis-Element sehr kompakt gestaltet werden. Insbesondere wird kein aufwändiger Mechanismus, wie ein Motor oder eine mechanische Kupplung, benötigt, um die Relativposition der Getriebeelemente zu verändern, was Platz spart und die Komplexität reduziert. Allerdings ist ein zusätzlicher Motor oder eine mechanische Kupplung durchaus möglich, beispielsweise wenn das Formgedächtnis-Element lediglich dazu ausgebildet ist, eine Hinbewegung, jedoch keine entgegengesetzte Rückbewegung zu verursachen. In diesem Fall kann eine teilweise oder vollständige Rückbewegung beispielsweise mithilfe einer anderen Komponente oder mithilfe eines weiteren Formgedächtnis-Elements bewirkt werden.

Da Formgedächtnis-Elemente in der Regel leichter sind als mechanische oder hydraulische Aktuatoren, kann vorteilhaft ein niedriges Gewicht der Stellvorrichtung erreicht werden, was besonders vorteilhaft in Anwendungen ist, in denen Gewicht kritisch ist, wie in der Luftfahrt oder Robotik.

Durch die Verwendung eines Formgedächtnis-Elements kann die Stellvorrichtung besonders präzise gesteuert werden, da das Material in definierten Temperaturbereichen auf eine bestimmte Weise reagiert. Dadurch kann die Relativposition der Getriebeelemente mit hoher Genauigkeit angepasst werden. Darüber hinaus haben Formgedächtnis-Elemente keine beweglichen Teile im klassischen Sinne und sind daher unanfällig für mechanischen Verschleiß.

Außerdem können Formgedächtnis-Elemente sehr schnell auf Änderungen, insbesondere Temperaturänderungen, reagieren, was eine rasche Anpassung der Relativposition der Getriebeelemente ermöglicht. Dies ermöglicht vorteilhaft ein schnelles und dynamisches Anpassungsverhalten des Spannungswellengetriebes.

Bei einer vorteilhaften Ausführung ist die Stellvorrichtung das Stellglied eines Regelkreises oder Bestandteil eines Stellgliedes eines Regelkreises. Dies bringt mehrere wesentliche Vorteile für das System mit sich. Wenn die Stellvorrichtung in einen Regelkreis integriert ist, kann sie nämlich automatisch auf Veränderungen der Umgebung oder der Systemparameter reagieren. Dies ermöglicht eine dynamische und kontinuierliche Anpassung der Position der Getriebeelemente relativ zueinander, ohne dass manuelle Eingriffe erforderlich sind. Der Regelkreis ermöglicht eine automatische Rückkopplung, wodurch die Stellvorrichtung kontinuierlich auf Abweichungen von einem Sollwert reagieren kann. Insbesondere kann das Spannungswellengetriebe auf externe Einflüsse (wie Laständerungen, Temperaturveränderungen oder mechanische Störungen) selbstständig reagieren und den jeweils optimalen Betriebspunkt ansteuern. Dies sorgt dafür, dass sich das Spannungswellengetriebe schnell an wechselnde Bedingungen anpassen kann, was die Funktionsfähigkeit unter verschiedenen Bedingungen verbessert. Insbesondere eine Integration in einen Regelkreis kann dazu beitragen, Überlastungen des Spannungswellengetriebes zu verhindern, indem kontinuierlich überwacht wird, ob das Spannungswellengetriebe im Sollbereich arbeitet. Bei Abweichungen können mittels der Stellvorrichtung Korrekturmaßnahmen ergriffen werden, bevor Schäden entstehen.

Bei einer besonderen Ausführung ist die Regelgröße des Regelkreises die Temperatur des Formgedächtnis-Elements. Diese Ausführung ist insbesondere unter Berücksichtigung des oben erwähnten Beispiels, bei dem die erhöhte Wärmeentwicklung während des Betriebs eines Spannungswellengetriebes zur Aktivierung des Formgedächtnis-Elements genutzt wird, sehr vorteilhaft. In diesem Beispielfall kann die Temperatur des Formgedächtnis-Elements als Regelgröße dienen, weil sie durch externe Faktoren wie die erhöhte Drehmomentbelastung oder Mikrobewegungen beeinflusst wird. Diese äußeren Einflüsse führen zu einer Wärmeentwicklung, die das Formgedächtnis-Element aktiviert und eine Veränderung der Relativposition der Getriebeelemente bewirkt. Der Regelkreis kann daher dazu ausgebildet sein, diese Temperatur zu überwachen und zu kontrollieren, um sicherzustellen, dass das Formgedächtnis-Element zur richtigen Zeit aktiviert wird, ohne eine Überhitzung des Spannungswellengetriebes zu riskieren. In diesem speziellen Fall wäre die Stellgröße des Regelkreises die mechanische Veränderung oder Anpassung der Relativposition der Getriebeelemente, die durch das Formgedächtnis-Element gesteuert wird. Der Regelkreis ist in diesem Fall dazu ausgebildet, die mechanische Reaktion auf die Wärmeeinwirkung zu steuern, um die optimale Betriebssituation zu erreichen. Der Regelkreis benötigt in diesem Falle vorteilhafterweise keine Sensorik und Elektronik, da das Formgedächtnis-Element durch seine werkstoffimmanente Eigenschaft die in konventionellen Regelungssystemen benötigte Sensorik und die zur Auswertung und Ausgabe der Stellgröße benötigte Elektronik in sich vereint.

Es ist alternativ auch möglich, dass die Stellgröße des Regelkreises die Temperatur des Formgedächtnis-Elements ist. Beispielsweise kann vorteilhaft vorgesehen sein, dass der Regelkreis aktiv eine Heizung steuert, um das Formgedächtnis-Element auf eine bestimmte Temperatur zu bringen.

Aktiv lässt sich, beispielsweise der Wellengenerator, axial verschieben, indem die Wärmezufuhr zum Überschreiten der kritischen Temperatur beispielsweise durch eine Heizung, wie einen bestromten Heizdraht, erfolgt. Wird beispielsweise über eine Sensorik ein zu hoher Verschleiß festgestellt (beispielsweise durch Drehmomentmessung, Temperaturmessung, Verschleißpartikelmessung), kann über eine Regelung der Stellweg über die Heizung, insbesondere die Stromstärke des in den Heizdraht eingeleiteten Stroms, eingestellt werden. Das Formgedächtnis-Element, insbesondere wenn es eine Formgedächtnislegierung beinhaltet, kann dabei auch direkt bestromt werden und sich Erwärmen. Der Vorteil gegenüber einer passiven Aktivierung ist, dass die Einbaulage der Getriebeelemente unabhängig von der Temperaturverteilung im Spannungswellengetriebe eingestellt werden kann. Ist beispielsweise bei einer weichen Einbausituation ein größeres Drehmoment temporär erforderlich, kann das Spannungswellengetriebe durch gezielte Stromzufuhr in eine strammere Einbausituation aktiv überführt werden.

Ganz allgemein kann vorteilhaft vorgesehen sein, dass ein vom Betriebszustand des Spannungswellengetriebes abhängiger Getriebeparameter, beispielsweise eine Temperatur, direkt oder indirekt als Auslöser für eine Verformung und/oder Rückverformung des Formgedächtnis-Elements fungiert. Da der Getriebeparameter, wie beispielsweise die Temperatur, in direktem oder indirektem Zusammenhang mit dem Betriebszustand steht, kann das Spannungswellengetriebe dynamisch auf sich ändernde Betriebsbedingungen reagieren. Zum Beispiel können sich durch erhöhte Last oder Reibung in bestimmten Betriebsphasen eine Veränderung des Getriebeparameters ergeben, die sofort die Aktivierung des Formgedächtnis-Elements bewirkt. Die resultierende Verformung des Formgedächtnis-Elements kann dazu genutzt werden, die Getriebeelemente relativ zueinander in eine Position zu bringen, die für den aktuellen Betriebszustand eine Verbesserung bedeutet oder sogar optimal ist.

Es ist möglich, dass das Formgedächtnis-Element einen Einweg-Formgedächtniseffekt aufweist. Derartige Formgedächtnis-Elemente können in der Regel einfach und kostengünstig hergestellt werden. Außerdem sind sie sehr robust. Beispielsweise kann vorteilhaft vorgesehen sein, dass das Formgedächtnis-Element eine Hinbewegung des Getriebeelements bewirkt, während eine Rückbewegung durch ein anderes Element, dass vorteilhaft ein weiteres Formgedächtnis-Element sein kann, bewirkt wird.

Bei einer besonders vorteilhaften Ausführung weist das Formgedächtnis-Element einen Zweiweg-Formgedächtniseffekt auf. Der Zweiweg-Formgedächtniseffekt ermöglicht es dem Formgedächtnis-Element, zwischen zwei vorgegebenen Formen hin- und herzuwechseln, wenn es abwechselnd erhitzt und abgekühlt wird. Der Zweiweg-Effekt bietet daher eine hohe Flexibilität in der Anwendung, da das Material in der Lage ist, auf verschiedene Betriebsbedingungen zu reagieren und in zwei definierte Formen zu wechseln. Hierdurch kann das Formgedächtnis-Element optimale Anpassungen an unterschiedliche Lasten und Betriebsbedingungen vornehmen, was vorteilhaft für die Effizienz und Leistungsfähigkeit des Spannungswellengetriebes ist. Durch die Ausnutzung des Zweiweg-Effektes kann außerdem eine sehr kompakte Stellvorrichtung erreicht werden, da weniger mechanische Teile zur Steuerung der Bewegung benötigt werden, was auch zu einer Reduktion des Gesamtgewichts und der Baugröße des Spannungswellengetriebes beiträgt.

Bei einer vorteilhaften Ausführung wird die Position der Getriebeelemente relativ bei einer Erhöhung der Belastungssituation angepasst. Die Folge ist vorzugsweise ein "Weicherwerden" des Getriebes, das mit vermindertem Verschleiß und niedrigerer Belastbarkeit verbunden ist. Sobald der Verschleiß gemindert ist und das Fett im Spannungswellengetriebe die übermäßige Wärme abgeführt hat, sinkt die Temperatur im Getriebe. Das Formgedächtnis-Element kann dann wieder seine typische Form unterhalb der kritischen Temperatur annehmen und das zuvor verschobene Getriebeelement, beispielsweise den Wellengenerator, wieder in seine vorherige Einbaulage oder in die Nähe seiner ursprünglichen Einbaulage verschieben. Auf diese Weise werden übermäßige Spannungen, insbesondere an der Kontaktstelle Wellengenerator-Verzahnungseingriff, abgebaut und eine übermäßige Wärmeentwicklung auch in der dann wieder eingestellten strammeren Position beseitigt. Bei erneutem Auftreten der Probleme wird diese Prozedur, vorzugsweise automatisch, wiederholt.

Wie bereits erwähnt, kann das Formgedächtnis-Element vorteilhaft ein thermoresponsives Formgedächtnis-Element sein. Thermoresponsive Formgedächtnis-Elemente können vorteilhaft einfach durch Temperaturänderungen aktiviert werden. Dies ermöglicht eine einfache, präzise und schnelle Steuerung. Es ist jedoch auch möglich, dass das Formgedächtnis-Element beispielsweise als lichtempfindliches Formgedächtnis-Element ausgebildet ist, das durch eine, insbesondere im Spannungswellengetriebe angeordnete, schaltbare Lichtquelle aktiviert wird. Lichtempfindliche Formgedächtnis-Elemente ändern ihre Form als Reaktion auf Licht, insbesondere UV-Strahlung. Alternativ kann das Formgedächtnis-Element als elektroresponsives und/oder magnetoresponsives Formgedächtnis-Element ausgebildet sein. Diese Elemente ändern ihre Form oder Eigenschaften als Reaktion auf elektrische und/oder magnetische Felder oder Ströme. Hierzu können beispielsweise elektroaktive Polymere (EAP) eingesetzt werden. Diese Materialien verändern ihre Gestalt, wenn zwischen integrierten oder aufgebrachten Elektroden ein elektrisches Feld angelegt wird. Je nach Aufbau kann sich der Polymerfilm dabei dehnen, stauchen oder biegen, sodass sich eine gezielte Bewegung oder Formänderung ergibt. Der Effekt beruht auf einer elektrostatischen Wechselwirkung oder einer Ionenwanderung innerhalb des Polymers und ermöglicht eine unmittelbare, feldgesteuerte Reaktion ohne thermische Zwischenstufe. Alternativ kann das Formgedächtnis-Element aus einer magnetisch aktivierbaren Formgedächtnislegierung bestehen, etwa aus einer Nickel-Mangan-GalliumLegierung (Ni-Mn-Ga). Bei diesen Materialien führt ein von einer elektrisch erregten Spule erzeugtes Magnetfeld direkt zu einer Änderung der Kristallstruktur und damit zu einer reversiblen Formänderung. Solche elektro- bzw. magnetoresponsiven Elemente zeichnen sich durch schnelle Ansprechzeiten, präzise Steuerbarkeit und eine hohe Zyklusstabilität aus. Es ist auch möglich, dass das Formgedächtnis-Element als mechanisch aktiviertes Formgedächtnis-Element ausgebildet ist. Diese Materialien reagieren auf mechanische Einwirkungen, wie Druck oder Zug. Konkret umfasst das mechanisch aktivierte Formgedächtnis-Element (18) ein Material, das bei mechanischer Beanspruchung eine reversible strukturelle Phasenumwandlung erfährt, wodurch eine Formänderung erfolgt, die über eine rein elastische Deformation hinausgeht.

Die Stellvorrichtung kann vorteilhaft als Linearverschiebevorrichtung ausgebildet sein. Eine solche Stellvorrichtung ermöglicht in vergleichsweise einfacher Weise eine präzise Positionierung der Getriebeelemente, da sie eine lineare Bewegung ohne Rotationskomponenten realisiert. Darüber hinaus kann eine solche Stellvorrichtung in einfacher Weise derart ausgebildet werden, dass sie eine hohe Dynamik und Reaktionsgeschwindigkeit bietet.

Bei einer ganz besonders vorteilhaften Ausführung ist die Stellvorrichtung dazu ausgebildet und angeordnet, die axiale Relativposition des Wellengenerators relativ zu dem Flexspline und/oder zu dem Circularspline zu verändern. Eine solche Ausführung hat den ganz besonderen Vorteil, dass die Vorspannung des Spannungswellengetriebes schnell und effizient beeinflusst und an die jeweils vorliegenden Betriebsbedingungen angepasst werden kann.

Insbesondere kann die Stellvorrichtung dazu ausgebildet und angeordnet sein, den axialen Abstand des Wellengenerators zu einer radial nach außen gerichteten Krempe oder einem radial nach innen gerichteten Boden oder einer radial nach innen gerichteten Kreisscheibe des Flexsplines bei einer Temperaturerhöhung automatisch zu vergrößern. Alternativ oder zusätzlich kann vorteilhaft vorgesehen sein, dass die Stellvorrichtung dazu ausgebildet und angeordnet ist, den axialen Abstand des Wellengenerators zu einer radial nach außen gerichteten Krempe oder einem radial nach innen gerichteten Boden oder einer radial nach innen gerichteten Kreisscheibe des Flexsplines bei einer Temperaturverringerung automatisch zu verringern.

Die Stellvorrichtung kann vorteilhaft ringförmig ausgebildet sein. Erstens ermöglicht die ringförmige Form eine kompakte Bauweise. Diese kompakte Struktur hilft, den Platzbedarf zu minimieren und erleichtert die Integration in das, zumeist rotationssymmetrische, Spannungswellengetriebe. Außerdem ermöglicht eine ringförmige Stellvorrichtung eine ausgeglichene Kräfteverteilung, was die Belastbarkeit und Stabilität der Stellvorrichtung erhöht.

Die Stellvorrichtung kann vorteilhaft eine, insbesondere ringförmige, Befestigungsbasis und ein, insbesondere ringförmiges, Aktuationselement aufweisen, das mittels des wenigstens einen Formgedächtnis-Elements mit der Befestigungsbasis verbunden ist. Mittels der Befestigungsbasis kann die Stellvorrichtung innerhalb des Spannungswellengetriebes direkt oder indirekt an einem Getriebebauteil, wie beispielsweise an dem Circularspline, und/oder an einem Getriebegehäuse befestigt sein.

Insbesondere kann vorteilhaft vorgesehen sein, dass das Aktuationselement im Falle einer Aktivierung des Formgedächtnis-Elements eine Bewegung relativ zu der Befestigungsbasis ausführt, um die Relativbewegung der Getriebeelemente zu bewirken. Das Aktuationselement kann wenigstens ein Wälzlager aufweisen, was es ermöglicht, dass das mittels der Stellvorrichtung zu bewegende Getriebebauteil (beispielsweise eines der Getriebeelemente oder eine mit einem der Getriebeelemente verbundene Welle), an das das Aktuationselement angekoppelt ist, relativ zu der Stellvorrichtung rotieren kann. Alternativ oder zusätzlich kann das Aktuationselement zu demselben Zweck auch ein Lager eines anderen Typs, insbesondere ein Gleitlager, aufweisen.

Bei einer vorteilhaften Ausführung ist die Stellvorrichtung dazu ausgebildet und angeordnet, die axiale Relativposition einer mit dem Wellengenerator verbundenen Antriebswelle relativ zu dem Flexspline und/oder zu dem Circularspline zu verändern. Diese Ausführung kann vorteilhaft sehr kompakt und robust ausgeführt werden.

Der Flexspline kann eine radialflexible Hülse aufweisen, die an einem ihrer Enden drehfest mit einer radial nach außen gerichteten Krempe verbunden ist, während sie an dem anderen Ende die Außenverzahnung aufweist. Alternativ kann der Flexspline eine radialflexible Hülse aufweisen, die an einem ihrer Enden drehfest mit einem radial nach innen gerichteten Boden oder einer radial nach innen gerichteten Kreisscheibe verbunden ist, während sie an dem anderen Ende die Außenverzahnung aufweist.

Der Wellengenerator kann ein radialflexibles Wälzlager und ein mittels des Wälzlagers relativ zu dem Flexspline rotierbar gelagertes Formungsmittel (beispielsweise eine ovale Scheibe) aufweist, welches das Wälzlager und/oder den Flexspline zu einer von der Kreisform verschiedenen Form formt.

Das Formgedächtnis-Element kann vorteilhaft aus einer Formgedächtnislegierung oder aus einem Formgedächtniskunststoff hergestellt sein. Formgedächtnislegierungen zeichnen sich durch ihre hohe mechanische Festigkeit und Robustheit aus, was sie ideal für die vorliegende Erfindung macht. Diese Materialien zeigen ausgeprägte Formgedächtniseigenschaften und können schnell auf Temperaturänderungen reagieren, was eine präzise Steuerung ermöglicht. Formgedächtniskunststoffe sind oft leichter als Formgedächtnislegierungen und können kostengünstig auch in komplizierten Formen hergestellt werden.

Von ganz besonderem Vorteil ist ein Aktuator, der ein erfindungsgemäßes Spannungswellengetriebe sowie einen Antriebsmotor aufweist. Der Antriebsmotor kann insbesondere dazu ausgebildet und angeordnet sein, das Formungsmittel des Wellengenerators zur Rotation anzutreiben. Hierfür kann eine Abtriebswelle des Antriebsmotors als Antriebswelle fungieren und unmittelbar drehfest mit dem Formungsmittel des Wellengenerators verbunden sein. Es ist beispielsweise auch möglich, dass eine Abtriebswelle des Antriebsmotors drehfest mit einer mit dem Formungsmittel drehfest verbundenen Antriebswelle verbunden ist. Insbesondere kann vorteilhaft vorgesehen sein, dass die Stellvorrichtung unmittelbar an die Antriebswelle angekoppelt ist, um den Wellengenerator relativ zu wenigstens einem anderen der Getriebeelemente zu bewegen.

Beispielsweise kann der Circularspline dazu ausgebildet und angeordnet sein, das Spannungswellengetriebe in einem Gehäuse oder einem übergeordneten System zu halten, während der Flexspline als Abtrieb fungiert. Alternativ kann der Flexspline dazu ausgebildet und angeordnet sein, das Spannungswellengetriebe in einem Gehäuse oder einem übergeordneten System zu halten, während der Circularspline als Abtrieb fungiert. Natürlich ist es auch möglich, das Spannungswellengetriebe in einem Umkehrbetrieb zu betreiben, bei dem das Formungsmittel (oder eine damit verbundene Abtriebswelle) als Abtrieb fungiert oder als Differentialgetriebe zu betreiben.

Beispielsweise können ein Gehäuse und/oder ein Stator des Antriebsmotors relativ zu dem Circularspline drehfest angeordnet sein und/oder drehfest mit dem Circularspline verbunden sein. Es ist insbesondere auch möglich, dass der Antriebsmotor und das Spannungswellengetriebe ein gemeinsames Gehäuse aufweisen.

Bei einer besonderen Ausführung ist der Antriebsmotor gemeinsam mit dem Wellengenerator relativ zu dem Flexspline verschiebbar angeordnet.

Von ganz besonderem Vorteil ist ein Roboter, insbesondere Industrieroboter, der wenigstens ein erfindungsgemäßes Spannungswellengetriebe oder einen erfindungsgemäßen Aktuator beinhaltet. Beispielsweise kann vorteilhaft vorgesehen sein, wenigstens ein Parameter des Spannungswellengetriebes situationsabhängig, beispielsweise in Abhängigkeit von der aktuellen Drehmomentbelastung, mittels der Stellvorrichtung, insbesondere automatisch, verändert wird.

Von ganz besonderem Vorteil ist außerdem ein Robotergelenk, insbesondere ein Robotergelenk für einen Industrieroboter, der wenigstens ein erfindungsgemäßes Spannungswellengetriebe oder einen erfindungsgemäßen Aktuator beinhaltet. Auch bei einem Robotergelenk kann vorteilhaft vorgesehen sein, wenigstens einen Parameter des Spannungswellengetriebes situationsabhängig, beispielsweise in Abhängigkeit von der aktuellen Drehmomentbelastung, mittels der Stellvorrichtung, insbesondere automatisch, zu verändern.

Von ganz besonderem Vorteil ist außerdem ein Fahrwerk, insbesondere aktives Fahrwerk für ein Kraftfahrzeug, das wenigstens ein erfindungsgemäßes Spannungswellengetriebe oder einen erfindungsgemäßen Aktuator aufweist. Bei einem solchen Fahrwerk ist es ermöglicht, einen Parameter des Spannungswellengetriebes fahrsituationsabhängig, insbesondere automatisch, zu ändern. Das erfindungsgemäße Fahrwerk hat den ganz besonderen Vorteil, dass es ermöglicht, einen erhöhten Fahrkomfort und/oder eine erhöhte Fahrsicherheit zu erreichen.

Von ganz besonderem Vorteil ist außerdem eine Lenkung, insbesondere eine PKW-Lenkung oder LKW-Lenkung, die wenigstens ein erfindungsgemäßes Spannungswellengetriebe oder einen erfindungsgemäßen Aktuator aufweist. Die Lenkung kann als Servolenkung und/oder als Überlagerungslenkung ausgebildet sein. Beispielsweise kann vorteilhaft vorgesehen sein, dass wenigstens ein Parameter des Spannungswellengetriebes fahrsituationsabhängig, beispielsweise in Abhängigkeit davon, ob ein Parkvorgang, ein Rangiervorgang oder eine schnelle Autobahnfahrt stattfindet, mittels der Stellvorrichtung, insbesondere automatisch, verändert wird.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Spannungswellengetriebes, wobei sich der Wellengenerator in einer ersten Relativposition relativ zu den anderen Getriebeelementen befindet,
- Fig. 2: das erste Ausführungsbeispiel eines erfindungsgemäßen Spannungswellengetriebes, wobei sich der Wellengenerator in einer zweiten Relativposition relativ zu den anderen Getriebeelementen befindet,
- Fig. 3: eine ausschnittsweise Schnittdarstellung des Formgedächtnis-Elements,
- Fig. 4: ein zweites Ausführungsbeispiel eines erfindungsgemäßen Spannungswellengetriebes,
- Fig. 5: ein drittes Ausführungsbeispiel eines erfindungsgemäßen Spannungswellengetriebes,
- Fig. 6: ein viertes Ausführungsbeispiel eines erfindungsgemäßen Spannungswellengetriebes,
- Fig. 7: ein Ausführungsbeispiel eines Aktuators, der ein erfindungsgemäßen Spannungswellengetriebe aufweist, und
- Fig. 8: ein weiters Ausführungsbeispiel eines Aktuators, der ein erfindungsgemäßen Spannungswellengetriebe aufweist.

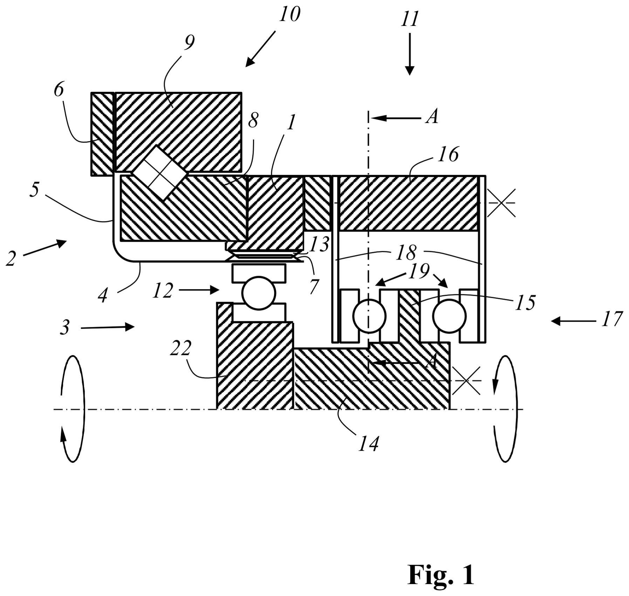

Fig. 1 zeigt ein Ausführungsbeispiel eines erfindungsgemäßen Spannungswellengetriebes. Das Spannungswellengetriebe beinhaltet wenigstens drei Getriebeelemente, nämlich einen Circularspline 1, einen Flexspline 2 und einen Wellengenerator 3. Der Flexspline weist eine radialflexible Hülse 4 auf, die an einem ihrer Enden drehfest mit einer radial nach außen gerichteten Krempe 5 und einem Befestigungsflansch 6 verbunden ist, während sie an dem anderen Ende die Außenverzahnung 7 aufweist.

Der Wellengenerator 3 weist ein radialflexibles Wälzlager 12 und ein mittels des radialflexiblen Wälzlagers 12 relativ zu dem Flexspline 2 rotierbar gelagertes, insbesondere ovales und/oder elliptisches, Formungsmittel 22 auf, welches das Wälzlager 12 und das Ende des Flexsplines 2, das die Außenverzahnung 7 aufweist, zu einer von der Kreisform verschiedenen, insbesondere ovalen und/oder elliptischen, Form formt. Der Wellengenerator 3 bringt so die Außenverzahnung 7 des Flexsplines 2 mit der Innenverzahnung 13 des Circularsplines 1 an zwei Stellen in Eingriff miteinander.

Der Circularspline 1 ist an dem Innenring 8 eines Kreuzrollenlagers 10 befestigt, während der Befestigungsflansch 6 des Flexsplines 2 an dem Außenring 9 des Kreuzrollenlagers 10 befestigt ist. Das Kreuzrollenlager 10 ist für die vorliegende Erfindung nicht unmittelbar von Relevanz. Es sind auch erfindungsgemäße Ausführungen ohne ein solches Kreuzrollenlager 10 möglich.

Das Spannungswellengetriebe weist eine Stellvorrichtung 11 auf, mittels der die Relativposition von wenigstens zwei der Getriebeelemente zueinander veränderbar ist, nämlich die axiale Position des Wellengenerators 3 relativ zu dem Flexspline 2. Konkret ist die Stellvorrichtung 11 dazu ausgebildet und angeordnet, die axiale Relativposition einer mit dem Wellengenerator 3 fest verbundenen Antriebswelle 14 relativ zu dem Flexspline 2 und zu dem Circularspline 1 zu verändern.

Die Antriebswelle 14 weist einen umlaufenden Kragen 15 auf, der die Ankopplung der Stellvorrichtung ermöglicht.

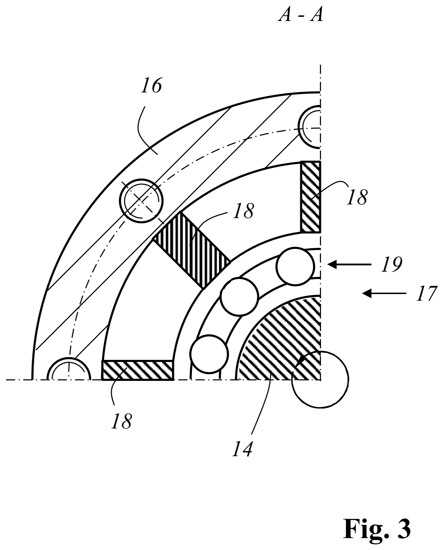

Die Stellvorrichtung 11 weist eine ringförmige Befestigungsbasis 16 und ein ringförmiges Aktuationselement 17 auf, das mittels mehrerer speichenartig angeordneter Formgedächtnis-Elemente 18 mit der Befestigungsbasis 16 verbunden ist, was in Figur 3 zu erkennen ist. Die Befestigungsbasis 16 ist an dem Circularspline 1 befestigt.

Das Aktuationselement 17 führt im Falle einer temperaturbedingten Aktivierung der Formgedächtnis-Elemente 18 eine Bewegung relativ zu der Befestigungsbasis 16 aus, um die Relativbewegung der Antriebswelle 14 und damit des Wellengenerators 3 zu bewirken. Das Aktuationselement 17 weist zwei Wälzlager 19 auf, die als Axiallager ausgebildet sind und zwischen denen der umlaufende Kragen 15 angeordnet ist. Die zwei Wälzlager 19 ermöglichen es, dass die Antriebswelle 14 relativ zu der Stellvorrichtung möglichst reibungsarm rotieren kann.

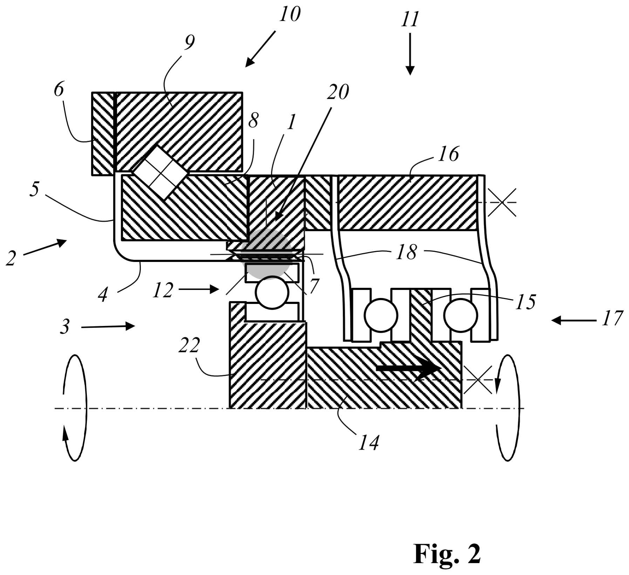

Die Figur 2 zeigt das Ausführungsbeispiel eines erfindungsgemäßen Spannungswellengetriebes, nachdem die Stellvorrichtung 11 den Wellengenerator 3 axial in eine zweite Relativposition relativ zu dem Flexspline 2 und dem Circularspline 1 bewegt hat. In der zweiten Relativposition ist der Abstand des Wellengenerators 3 zu der Krempe 5 des Flexsplines 2 vergrößert. Auslöser der Bewegung des Wellengenerators 3 war eine erhöhte Wärmeentwicklung 20 im Bereich der Verzahnungen 7, 13, wodurch die Formgedächtnis-Elemente 18 aktiviert wurden. Durch die Bewegung des Wellengenerators 3 relativ zu dem Flexspline 2 aus der ersten Relativposition in die zweite Relativposition wurde die Vorspannung des Spannungswellengetriebes reduziert und so ein erhöhter Verschleiß des Spannungswellengetriebes verhindert oder zumindest verringert.

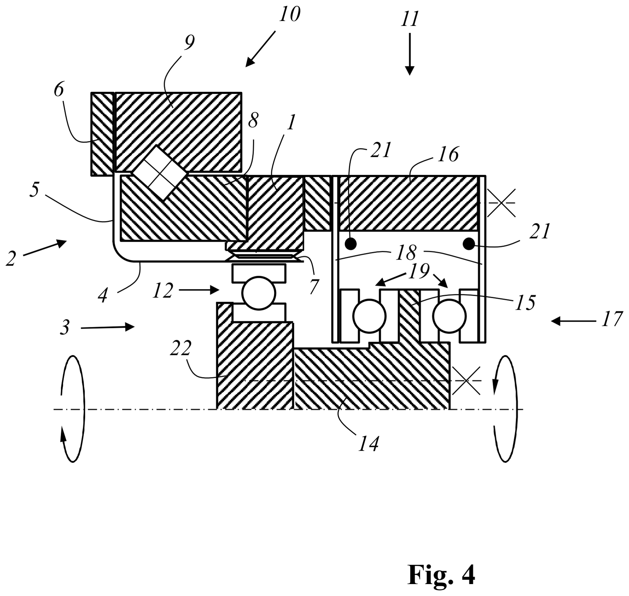

Die Figur 4 zeigt ein zweites Ausführungsbeispiel eines erfindungsgemäßen Spannungswellengetriebes, das eine Heizung, nämlich zwei umlaufende Heizdrähte 21, zum Aktivieren der Formgedächtnis-Elemente 18 aufweist. Die Heizdrähte 21 können beispielsweise mittels (in der Figur 4 der besseren Übersichtlichkeit nicht dargestellten) Haltern an der Befestigungsbasis 16 oder an den Formgedächtnis-Elementen 18 befestigt sein.

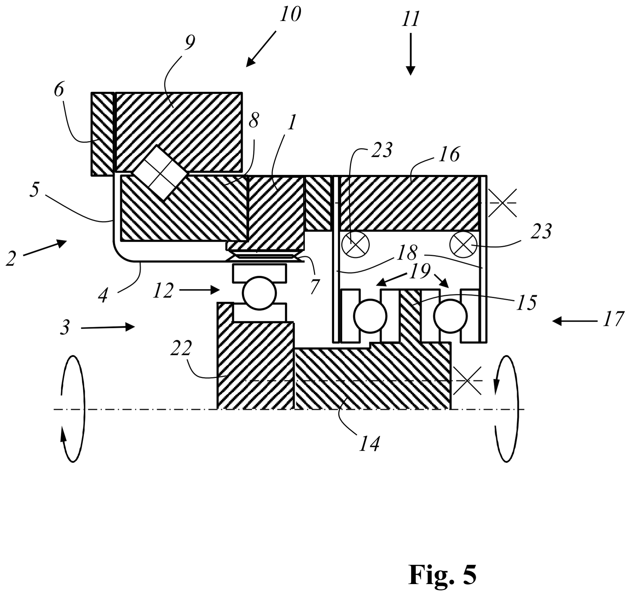

Die Figur 5 zeigt ein drittes Ausführungsbeispiel eines erfindungsgemäßen Spannungswellengetriebes, bei dem die Formgedächtnis-Elemente 18 als lichtempfindliche Formgedächtnis-Elemente 18 ausgebildet sind. Das Spannungswellengetriebe weist mehrere Lichtquellen 23 zum Aktivieren der Formgedächtnis-Elemente 18 auf. Die Lichtquellen 23 können beispielsweise mittels (in der Figur 5 der besseren Übersichtlichkeit nicht dargestellten) Haltern an der Befestigungsbasis 16 oder an den Formgedächtnis-Elementen 18 befestigt sein.

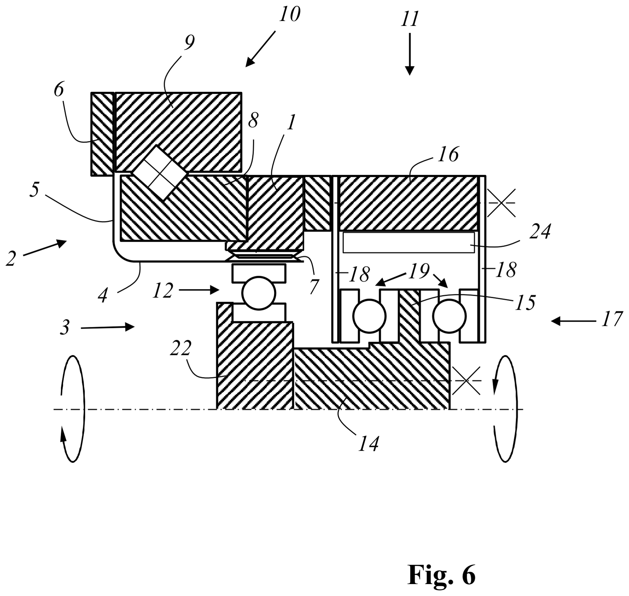

Die Figur 6 zeigt ein viertes Ausführungsbeispiel eines erfindungsgemäßen Spannungswellengetriebes, bei dem die Formgedächtnis-Elemente 18 als magnetoresponsive Formgedächtnis-Elemente 18 ausgebildet sind. Das Spannungswellengetriebe weist Eine elektrische Spule 24 zum Erzeugen eines magnetischen Feldes und zum Aktivieren der Formgedächtnis-Elemente 18 auf. Die elektrische Spule 24 kann beispielsweise mittels (in der Figur 6 der besseren Übersichtlichkeit nicht dargestellten) Haltern an der Befestigungsbasis 16 oder an den Formgedächtnis-Elementen 18 befestigt sein.

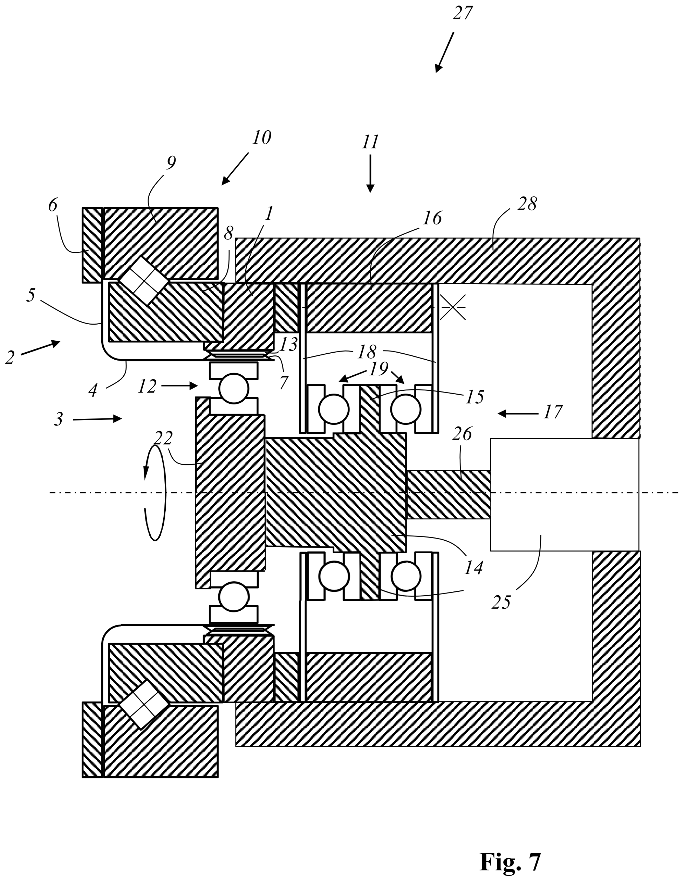

Die Figur 7 zeigt ein Ausführungsbeispiel eines Aktuators 27, der ein erfindungsgemäßes Spannungswellengetriebe sowie einen Antriebsmotor 25 und ein Gehäuse 28 aufweist. Der Circularspline 1 und die Befestigungsbasis 16 sind drehfest mit dem Gehäuse verbunden. Der Antriebsmotor 25 ist unbeweglich an dem Gehäuse 28 befestigt. Der Antriebsmotor 25 treibt das Formungsmittel 22 des Wellengenerators 3 über eine teleskopierbare Antriebsmotor-Abtriebswelle 26 zur Rotation an. Die Länge teleskopierbaren Antriebsmotor-Abtriebswelle 26 kann beispielsweise durch ineinandergeschobene Wellenstücke (z. B. Schiebestücke mit Verzahnung) veränderbar sein. Auf diese Weise ist eine lineare Bewegung der Antriebswelle 14 und des Formungsmittels 22 während des Betriebs des Spannungswellengetriebes ermöglicht.

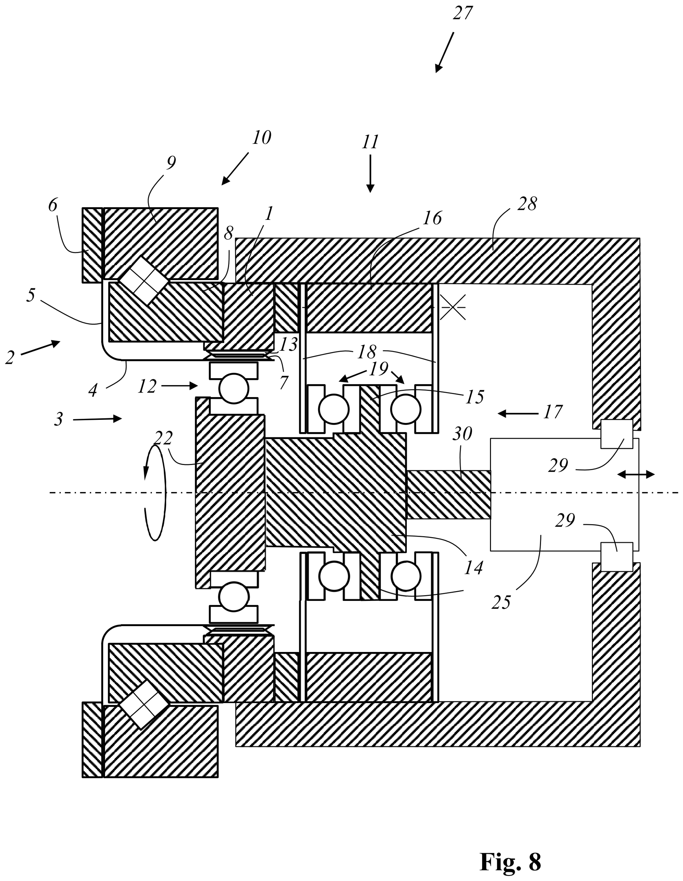

Die Figur 8 zeigt ein weiters Ausführungsbeispiel eines Aktuators 27, der ein erfindungsgemäßes Spannungswellengetriebe sowie einen Antriebsmotor 25 und ein Gehäuse 28 aufweist. Der Circularspline 1 und die Befestigungsbasis 16 sind drehfest mit dem Gehäuse verbunden. Der Antriebsmotor 25 ist in dem Gehäuse mittels einer Linearführung 29 linear beweglich gelagert, jedoch relativ zu dem Gehäuse 28 drehfest 28 gehalten, so dass das Drehmoment des Antriebsmotors 25 auf das Formungsmittel 22 übertragen wird. Der Antriebsmotor 25 treibt das Formungsmittel 22 des Wellengenerators 3 über eine starre, nicht teleskopierbare Antriebsmotor-Abtriebswelle 30 zur Rotation an. Auf diese Weise ist eine lineare Bewegung der Antriebswelle 14 und des Formungsmittels 22 im Betrieb des Spannungswellengetriebes ermöglicht.

### Bezugszeichenliste:

- 1: Circularspline
- 2: Flexspline
- 3: Wellengenerator
- 4: radialflexible Hülse
- 5: Krempe
- 6: Befestigungsflansch
- 7: Außenverzahnung
- 8: Innenring
- 9: Außenring
- 10: Kreuzrollenlager
- 11: Stellvorrichtung
- 12: radialflexibles Wälzlager
- 13: Innenverzahnung
- 14: Antriebswelle
- 15: Kragen
- 16: Befestigungsbasis
- 17: Aktuationselement
- 18: Formgedächtnis-Element
- 19: Wälzlager
- 20: Wärmeentwicklung
- 21: Heizdraht
- 22: Formungsmittel
- 23: Lichtquelle
- 24: Elektrische Spule
- 25: Antriebsmotor
- 26: Teleskopierbare Antriebsmotor-Abtriebswelle
- 27: Aktuator
- 28: Gehäuse
- 29: Linearführung
- 30: Starre Antriebsmotor-Abtriebswelle

## Patentansprüche

1. Spannungswellengetriebe beinhaltend wenigstens drei Getriebeelemente, nämlich einen Circularspline (1), einen Flexspline (2) und einen Wellengenerator (3), und beinhaltend eine Stellvorrichtung (11), mittels der eine Relativposition von wenigstens zwei der Getriebeelemente zueinander veränderbar ist, **dadurch gekennzeichnet, dass** die Stellvorrichtung (11) wenigstens ein Formgedächtnis-Element (18) aufweist.

2. Spannungswellengetriebe nach Anspruch 1, **dadurch gekennzeichnet, dass**
a. die Stellvorrichtung (11) das Stellglied eines Regelkreises ist oder dass die Stellvorrichtung (11) Bestandteil eines Stellgliedes eines Regelkreises ist, und/oder dass
b. ein von Betriebszustand des Spannungswellengetriebes abhängiger Getriebeparameter, beispielsweise eine Temperatur, direkt oder indirekt als Auslöser für eine Verformung und/oder Rückverformung des Formgedächtnis-Elements (18) fungiert.

3. Spannungswellengetriebe nach Anspruch 2, **dadurch gekennzeichnet, dass** das Spannungswellengetriebe zumindest eines der folgenden Merkmale a bis d aufweist:
a. eine Regelgröße oder eine Stellgröße des Regelkreises ist die Temperatur des Formgedächtnis-Elements (18),
b. die Stellvorrichtung (11) ist dazu ausgebildet und angeordnet, den axialen Abstand des Wellengenerators (3) zu einer radial nach außen gerichteten Krempe (5) oder einem radial nach innen gerichteten Boden oder einer radial nach innen gerichteten Kreisscheibe des Flexsplines (2) bei einer Temperaturerhöhung automatisch zu vergrößern,
c. die Stellvorrichtung (11) ist dazu ausgebildet und angeordnet, den axialen Abstand des Wellengenerators (3) zu einer radial nach außen gerichteten Krempe (5) oder einem radial nach innen gerichteten Boden oder einer radial nach innen gerichteten Kreisscheibe des Flexsplines (2) bei einer Temperaturverringerung automatisch zu verringern,
d. das Formgedächtnis-Element (18) ist ein thermoresponsives Formgedächtnis-Element (18).

4. Spannungswellengetriebe nach Anspruch 3, **dadurch gekennzeichnet, dass** das Spannungswellengetriebe eine Heizung zum Aktivieren des Formgedächtnis-Elements (18) beinhaltet.

5. Spannungswellengetriebe nach Anspruch 2, **dadurch gekennzeichnet, dass** eine Regelgröße des Regelkreises eine auf das Formgedächtnis-Element (18) wirkende Kraft ist.

6. Spannungswellengetriebe nach einem der Ansprüche 1 bis 5, **dadurch gekennzeichnet, dass**
a. das Formgedächtnis-Element (18) einen Einweg-Formgedächtniseffekt aufweist, oder dass
b. das Formgedächtnis-Element (18) einen Zweiweg-Formgedächtniseffekt aufweist.

7. Spannungswellengetriebe nach einem der Ansprüche 1 bis 6, **dadurch gekennzeichnet, dass** das Spannungswellengetriebe wenigstens eines der folgenden Merkmale a bis d aufweist:
a. die Stellvorrichtung (11) ist als Linearverschiebevorrichtung ausgebildet,
b. die Stellvorrichtung (11) ist dazu ausgebildet und angeordnet, die axiale Relativposition des Wellengenerators (3) relativ zu dem Flexspline (2) und/oder zu dem Circularspline (1) zu verändern.

8. Spannungswellengetriebe nach einem der Ansprüche 1 bis 7, **dadurch gekennzeichnet, dass**
a. die Stellvorrichtung (11) ringförmig ausgebildet ist, und/oder dass
b. die Stellvorrichtung (11) eine, insbesondere ringförmige, Befestigungsbasis (16) und ein, insbesondere ringförmiges und/oder wenigstens ein Wälzlager (19) aufweisendes, Aktuationselement (17) aufweist, das mittels des wenigstens einen Formgedächtnis-Elements (18) mit der Befestigungsbasis (16) verbunden ist.

9. Spannungswellengetriebe nach einem der Ansprüche 1 bis 8, **dadurch gekennzeichnet, dass**
a. eine Befestigungsbasis (16) der Stellvorrichtung (11) direkt oder indirekt starr mit dem Circularspline (1) verbunden ist, und/oder dass
b. die Stellvorrichtung (11) dazu ausgebildet und angeordnet ist, die axiale Relativposition einer mit dem Wellengenerator (3) verbundenen Antriebswelle relativ zu dem Flexspline (2) und/oder zu dem Circularspline (1) zu verändern.

10. Spannungswellengetriebe nach einem der Ansprüche 1 bis 9, **dadurch gekennzeichnet, dass** das Spannungswellengetriebe wenigstens eines der folgenden Merkmale a bis d aufweist:
a. der Flexspline (2) weist eine radialflexible Hülse (4) auf, die an einem ihrer Enden drehfest mit einer radial nach außen gerichteten Krempe verbunden ist,
b. der Flexspline (2) weist eine radialflexible Hülse (4) auf, die an einem ihrer Enden drehfest mit einem radial nach innen gerichteten Boden oder einer radial nach innen gerichteten Kreisscheibe (7) verbunden ist,
c. der Circularspline (1) weist eine Innenverzahnung auf und der Flexspline (2) weist eine mit der Innenverzahnung (13) in Eingriff stehende Außenverzahnung (7) auf,
d. der Wellengenerator (3) weist ein Wälzlager (12) und ein mittels des Wälzlagers (12) relativ zu dem Flexspline (2) rotierbar gelagertes Formungsmittel (22) auf, welches das Wälzlager (12) und/oder den Flexspline (2) zu einer von der Kreisform verschiedenen Form formt.

11. Spannungswellengetriebe nach einem der Ansprüche 1 bis 10, **dadurch gekennzeichnet, dass** das Formgedächtnis-Element (18) aus einer Formgedächtnislegierung oder aus einem Formgedächtniskunststoff hergestellt ist.

12. Aktuator, der ein Spannungswellengetriebe nach einem der Ansprüche 1 bis 11 sowie einen Antriebsmotor aufweist.

13. Aktuator nach Anspruch 12, **dadurch gekennzeichnet, dass** der Aktuator wenigstens eines der folgenden Merkmale a bis c aufweist:
a. der Antriebsmotor ist dazu ausgebildet und angeordnet, das Formungsmittel (22) des Wellengenerators (3) zur Rotation anzutreiben,
b. ein Gehäuse und/oder ein Stator des Antriebsmotors ist relativ zu dem Circularspline (1) drehfest angeordnet und/oder drehfest mit dem Circularspline (1) verbunden,
c. der Antriebsmotor ist gemeinsam mit dem Wellengenerator (3) relativ zu dem Flexspline (2) verschiebbar angeordnet.

14. Roboter, insbesondere Industrieroboter, oder Robotergelenk beinhaltend wenigstens ein Spannungswellengetriebe nach einem der Ansprüche 1 bis 11 oder beinhaltend einen Aktuator nach Anspruch 12 oder 13.

15. Fahrzeugkomponente, die wenigstens ein Spannungswellengetriebe nach einem der Ansprüche 1 bis 11 oder einen Aktuator nach Anspruch 12 oder 13 aufweist, wobei die Fahrzeugkomponente insbesondere ausgebildet sein kann als
a. Fahrwerk, insbesondere aktives Fahrwerk für ein Kraftfahrzeug, oder als
b. Lenkung, insbesondere PKW-Lenkung oder LKW-Lenkung, oder als
c. Servolenkung oder als
d. Überlagerungslenkung.
